# EUROPEAN PATENT APPLICATION

(11) **EP 2 658 171 A1**
(43) Date of publication of application: **30.10.2013**
(21) Application number: 13020061.1
(22) Date of filing: 05.12.2002
(51) Int. Cl.: H04L 12/16, G06F 15/16, G08C 25/02, H04L 1/16, H04L 1/18, H04W 28/04

(54) **Apparatus and method for use in effecting automatic repeat requests in wireless multiple access communications systems**

(62) Divisional of application: 02795725.7
(71) Applicant: Qualcomm Incorporated, San Diego, CA 92121-1714 (US)
(72) Inventor: Laroia, Rajiv, Basking Ridge, NJ 07920 (US); LI, Junyi, Bedminster, NJ 07921 (US); Uppala, Sathyadev, Scotch Plains, NJ 07076 (US)
(74) Representative: Schmidbauer, Andreas Konrad

(57) **Abstract**

In a wireless multiple access communications system (Fig. 1) the channel resource is managed partitioning the channel resource into an acknowledgment channel and a traffic channel in a fixed manner, each of which carries its respective segments (Fig. 3). A traffic segment (Fig, 2, #202) is the basic resource unit to convey data, and has a prescribed finite time interval and bandwidth. Each traffic segment is associated with an acknowledgment segment in a one-to-one manner (Fig. 3). The acknowledgment segment conveys acknowledgment information of the associated traffic segment (Fig. 5, 502), and both the base station (Fig, 1, #101) and the wireless terminals (Fig. 1, #103-1...Y) use the acknowledgment segment to acknowledge associated traffic segments.; The base station and the wireless terminal monitors all the acknowledgment segments associated with the segments it transmitted (Fig, 5, #503) and determines if any segments need to be retransmitted (Fig, 5, #504). The wireless terminal also performs retransmission of its respective segments (Fig. 6).

## Description

### Technical Field

This invention relates to wireless communications systems and, more particularly, to wireless communications between wireless terminals and base stations in a multiple access communications system.

### Background of the Invention

Typically, the wireless channel used in a wireless communications system is not as reliable as a wireline channel, because of such channel impairments as multipath fading and Doppler spread. One general technique of improving the wireless channel reliability is to use automatic repeat requests (ARQs). That is, if a received traffic data is detected as having errors, the transmitter will be instructed to retransmit the same traffic data again. When the wireless channel condition and/or interference condition is not completely correlated, retransmission increases the probability of successful traffic reception. One such wireless communications system is the Orthogonal Frequency Division Multiplexing (OFDM) based Spread Spectrum Multiple Access system.

In prior known wireless systems, ARQ is based on exchanging control messages. Specifically, when the receiver detects an error in the received traffic data, it transmits back a control message that includes a request for retransmission of the erroneous traffic data in a control channel dedicated between the transmitter and the receiver. In general, the retransmission request contains the identifier of an corrupted or missed traffic data, such as its sequence number.

Additionally, because the dedicated control channel is also used to convey other control messages, the retransmission request message may have to be inserted into a generic control message format, which may include a greater number of bits than is required by the retransmission request message. Moreover, a specific control message header is typically included for the retransmission request message. Hence, the control message based transmission technique of retransmission requests may take a long time to transmit and cause large overhead, which is very undesirable. As a result, it is generally considered that real-time traffic cannot benefit much from ARQ as the transmission of the retransmission request is not fast enough to meet system deadline requirement.

### Summary of the Invention

These and other problems and limitations of prior known wireless communications system traffic data retransmission arrangements are overcome by managing the channel resource by utilizing traffic segments and acknowledgment segments. This is realized by partitioning the channel resource into an acknowledgment channel and a traffic channel in a fixed manner. The acknowledgment channel includes acknowledgment segments and the traffic channel includes traffic segments. Individual acknowledgement and traffic segments may be associated with individual wireless terminals. Thus, one or more individual segments may be dedicated for use by a specific wireless terminal. The acknowledgment channel, like the traffic channel, may include segments dedicated for use by different wireless terminals. Thus, while individual channel segments may be dedicated to individual wireless terminals, since each channel includes segments corresponding to multiple devices, the acknowledgement and traffic channels may be viewed as channels which are common or shared by multiple wireless terminals. However, given that the channel segments are dedicated to individual wireless terminals, collisions of communications corresponding to different wireless terminals are avoided. A traffic segment is the basic resource unit to transport traffic data and has a prescribed finite time interval and bandwidth.

In one exemplary embodiment, each traffic segment in a downlink or an uplink is associated with an acknowledgment channel segment in a one-to-one manner. In such an embodiment, for each traffic segment there is a corresponding acknowledgement segment. Thus, there is a fixed relationship between each traffic segment and an acknowledgement segment which is known apriori to the various communications system components. Each individual acknowledgment segment is used to convey the acknowledgment information for the corresponding traffic segment. When traffic segments are used by, e.g., dedicated to, different users, the associated acknowledgment segments corresponding to the traffic segments are likewise also dedicated to the same set of different users. In such a case each traffic segment and corresponding acknowledgement segment corresponds to the same individual user. When the traffic segments are used by different users, the corresponding acknowledgment segments are also used by different users.

The base station uses the acknowledgment segments in the downlink to acknowledge the associated traffic segments received in the uplink. A wireless terminal that receives a downlink traffic segment uses the associated acknowledgment segment in the uplink to acknowledge the traffic segment. In various embodiments, each acknowledgement segment includes one bit which indicates either: 1) the successful communication of the data in the corresponding traffic segment or 2) the failure to successfully communicate the data in the traffic segment. In some embodiments, the acknowledgement segment is a single bit segment.

The base station monitors the acknowledgment segments associated with the traffic segments that the base station has transmitted to determine whether any of the traffic segments needs to be retransmitted. When a wireless terminal has transmitted a traffic segment in the uplink, it monitors the associated acknowledgment segment in the downlink to determine whether the traffic segment needs to be retransmitted.

Advantageously, given the fixed association between traffic and acknowledgement segments, the acknowledgment segment does not need to specify the resource parameters of the traffic segment, i.e., the slot and waveform set indices, or the identifier of the missed traffic data, such as sequence number. Instead, the information to be contained in an acknowledgment segment can be limited to just one-bit of information indicating whether the associated traffic has been successfully received. However, to facilitate other physical layer functions such as for the transmitter to measure the channel quality, an acknowledgment segment may also include some information of decoding results for the associated traffic segment, such as a measure of the raw error rate.

### Brief Description of the Drawing

FIG. 1 shows, in simplified block diagram form, a wireless multiple access communications system in which the invention may be advantageously employed;
FIG. 2 is a graphical representation illustrating an acknowledgment segment and a number of traffic segments useful in describing the invention;
FIG. 3 is a graphical representation illustrating a prescribed relationship between acknowledgment segments and traffic segments also useful in describing the invention;
FIG. 4A is a graphical representation illustrating the logical flow of acknowledging traffic segments transmitted in the downlink by the base station also useful in describing the invention;
FIG. 4B is a graphical representation illustrating the logical flow of acknowledging traffic segments received in the uplink by the base station also useful in describing the invention;
FIG. 5 is a flowchart illustrating steps in a transmitter process for determining whether to retransmit the traffic data in accordance with the invention; and
FIG. 6 is a flowchart illustrating steps in a receiver process for determining whether or not to transmit a retransmission request in accordance with the invention.

### Detailed Description

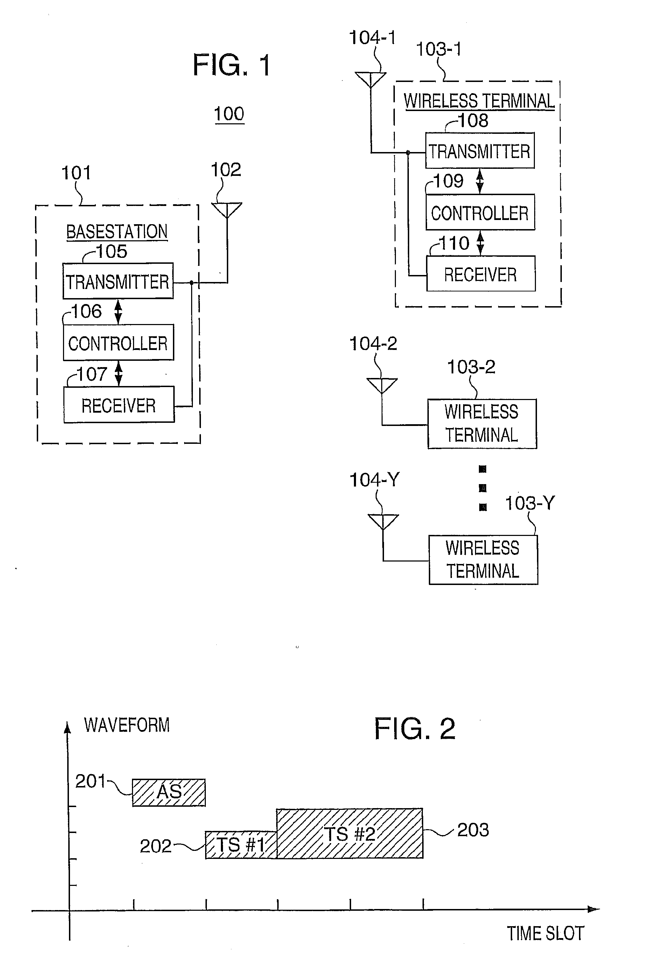

FIG. 1 shows, in simplified block diagram form, a wireless mobile multiple access communications system in which the invention may be advantageously employed. It should be noted that although applicants' unique invention will be described in the context of a wireless mobile communications system, it has equal application to non-mobile systems. As indicated above, one such mobile wireless communications system is OFDM based spread spectrum multiple access.

More specifically, traffic data is transported via the traffic channel and the traffic channel is allocated dynamically among the wireless terminals. Transported traffic data are to be acknowledged by the receiver rapidly in the invention by transmitting an acknowledgment in a segment of a common acknowledgement channel. The acknowledgement channel can be shared by multiple wireless terminals and thus users. This is realized by managing the channel, i.e., bandwidth and time interval, in the form of segments and by acknowledging traffic segments with acknowledgment segments by associating a traffic segment to a particular acknowledgment segment in a fixed, e.g., one-to-one, manner. In various embodiments this results in a direct one to one relationship between a traffic segment and an acknowledgement segment.

Specifically, shown in FIG. 1 is a mobile multiple access wireless communications system 100. System 100 includes base station 101 including antenna 102 and one or more remote wireless terminals, e.g., mobile units, 103-1, 103-2 through 103-Y including associated antennas 104-1, 104-2 and 104-Y, respectively. Transmission of signals is from and to base station 101 to and from remote wireless terminals 103. Wireless terminals 103 share the transmission spectrum in a dynamic fashion. The base station 101 uses the acknowledgement segments in the downlink to acknowledge the associated traffic segments received in the uplink. A wireless terminal 103 that receives a downlink traffic segment uses the associated acknowledgment segment in the uplink to acknowledge the traffic segment. The acknowledgement segment corresponding to a particular downlink traffic segment is used, in some embodiments, only by the wireless terminal to which the particular downlink traffic segment was directed. Over time, as downlink traffic segments are transmitted to different wireless terminals, the different wireless terminals will each use an acknowledgement segment. The base station 101 monitors the acknowledgment segments associated with the traffic segments that the base station 101 has transmitted to determine whether any of the traffic segments needs to be retransmitted. When a wireless terminal 103 has transmitted a traffic segment in the uplink, it monitors the associated acknowledgment segment in the downlink to determine whether the traffic segment needs to be retransmitted.

In this example, base station 101 includes transmitter 105, receiver 107 and controller 106 for transmitting and receiving wireless messages via antenna 102. Controller 106 is employed to control operation of transmitter 105 and receiver 107, in accordance with the invention. Similarly, in this example, each of wireless terminals 103-1 through 103-Y includes transmitter 108, receiver 110 and controller 109 for transmitting and receiving wireless messages via antenna 104. Controller 109 is employed to control operation of transmitter 108 and receiver 110, in accordance with the invention.

FIG. 2 illustrates the physical mechanism of managing the channel resource in the form traffic segments 202 and 203 and an acknowledgement segment 201. The wireless channel resource (bandwidth and time interval) is partitioned into an acknowledgment channel including the acknowledgment segments 201, etc., and a traffic channel including the traffic segments 202, 203, etc. Also shown are time slots. A time slot is a basic time unit and associated with it is a unique time slot index. During any particular time slot there could be a number of waveform present that are used as the traffic channel. The waveforms may or may not be orthogonal to each other. One or more waveforms are grouped together as a waveform set. Each waveform set has a unique waveform set index. A traffic segment is defined as a combination of prescribed time slot and waveform set indices. In general, a traffic segment contains prescribed waveforms over a prescribed finite time interval.

In a given system, different traffic segments may contain time slots having time intervals of different duration and having waveform sets with different bandwidths. For example, as shown in FIG. 2, traffic segment #1 202 contains one time slot and two waveforms, while segment #2 203 contains two time slots and four waveforms.

All the traffic data between the base station 101 and the wireless terminals 103 is conveyed on traffic segments. A traffic segment is the basic unit of the traffic channel resource. In a wireless system, there are downlink traffic segments and uplink traffic segments. The traffic channel resource is allocated in a form of traffic segment allocation. That is, the base station 101 assigns traffic segments to the wireless terminals 103 in the cell such that the assigned wireless terminals 103 receive traffic in the assigned downlink traffic segments or transmit traffic in the assigned uplink traffic segments.

Acknowledgment information is also conveyed in a form of segments, called acknowledgement segments. Acknowledgment segments are separate from traffic segments. In a wireless system, there are downlink and uplink acknowledgment segments. Downlink acknowledgment segments are transmitted by the base station, and may thus be coded together. However, uplink acknowledgement segments are generally transmitted by different mobiles, and thus cannot be coded together.

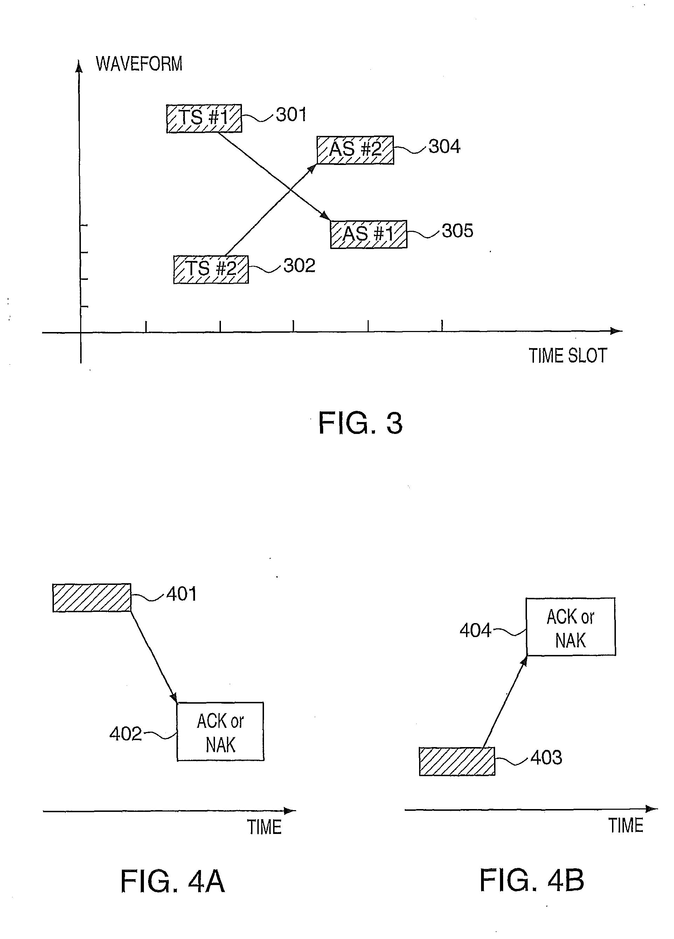

FIG. 3 is a graphical representation illustrating a prescribed relationship between acknowledgment segments and traffic segments also useful in describing the invention. Thus, as shown, the downlink wireless channel resource (bandwidth and time interval) is partitioned into an acknowledgment channel 304 and a traffic channel 301, among other channels. Similarly, the uplink wireless channel resource (bandwidth and time interval) is partitioned into an acknowledgment channel 305 and a traffic channel 302, among other channels. The partitioning of the traffic channel and the acknowledgment channel in both downlink and uplink is fixed, and the construction of traffic segments and acknowledgment segments is also determined a priori. Each traffic segment in the downlink or uplink is associated with an acknowledgment segment in the uplink or downlink, respectively, in a prescribed one-to-one manner. For example, as shown in FIG. 3 downlink traffic segment #1 301 is associated with uplink acknowledgment segment #1 305, and uplink traffic segment #2 302 is associated with downlink acknowledgment segment #2 304.

An acknowledgement segment, e.g., 304 or 305, is used to convey the acknowledgment information of the associated traffic segment, e.g., 302 or 301, respectively. Therefore, an acknowledgment segment cannot precede the associated traffic segment. The delay from the traffic segment to the associated acknowledgement segment reflects the time the receiver, e.g., 107 or 110, takes to decode the traffic segment and that an associated transmitter, e.g., 105 or 108, takes to prepare to transmit the acknowledgment. In a preferred embodiment, the delay should be selected to the minimum value that can be allowed by the processing capability of base stations and wireless terminals that are supported in a particular system.

The fact that the association of a traffic segment, e.g., 301 or 302, and an acknowledgment segment, e.g., 305 or 304, respectively, is determined in a prescribed manner allows that the acknowledgment segment does not necessarily include the resource parameters of the associated traffic segment, i.e., the time slot and waveform set indices, or the identifier of the missed traffic data, such as sequence number, In turn, this significantly reduces the overhead in transmitting acknowledgment segments. The essential information to be contained in an acknowledgment segment is just one-bit of information indicating whether the associated traffic data has been successfully received. Additionally, to facilitate other physical layer functions, such as the transmitter measuring the channel quality, an acknowledgment segment may also include some information regarding decoding results for the associated traffic segment, such as the estimate of raw error rate. By allocating an appropriate amount of channel resource, e.g., bandwidth and/or time interval, and/or transmission power, to acknowledgment segments, reliability of the ARQ can be ensured.

FIG. 4A is a graphical representation illustrating the logical flow of acknowledging traffic segments transmitted in the downlink by the base station 101. For each transmitted downlink traffic segment 401, the base station 101 receives the associated acknowledgment segment 402 in the uplink to determine whether the traffic segment needs to be retransmitted. Similarly, a wireless terminal 103 that receives a downlink traffic segment transmits the associated acknowledgment segment in the uplink to acknowledge the traffic segment.

FIG. 4B is a graphical representation illustrating the logical flow of acknowledging traffic segments received in the uplink by the base station 101. For each received uplink traffic segment 403, the base station 101 transmits the associated acknowledgment segment 404 in the downlink to acknowledge the uplink traffic segment 403. When a wireless terminal 103 has transmitted a traffic segment in the uplink, it monitors the associated acknowledgement segment in the downlink to determine whether the traffic segment needs to be retransmitted.

In this example, a positive acknowledgment (ACK) indicates that the associated traffic segment does not have to be retransmitted, while a negative acknowledgment (NAK) indicates that the associated traffic segment needs to be retransmitted. More specifically, the one-bit of information includes a first logical state and a second logical state. In this example, the first logical state is a logical 1 indicating the positive acknowledgment and the second logical state is a logical 0 indicating the negative acknowledgment.

The segment based ARQ scheme in accordance with the invention is fundamentally different from the existing form of the message based ARQ scheme in that acknowledgment information can be feed back very rapidly, thereby facilitating fast ARQ. Note that the delay between a traffic segment to the associated acknowledgment segment is mainly limited by the processing capability of the receiver, which is significantly less than the delay in the message based ARQ scheme. Additionally, as the acknowledgment segments only transport essentially one-bit of information, the acknowledgment overhead is very small. Unlike the existing ARQ technique where the acknowledgment message is transported in a control channel resource dedicated to a wireless terminal, according to the invention, the acknowledgment segments are shared by many wireless terminals 103 in the sense that when traffic segments are used by different users, the associated acknowledgment segments are also used by different users. Note that sharing the acknowledgment channel in accordance with an aspect of the invention does not cause any problem of collision.

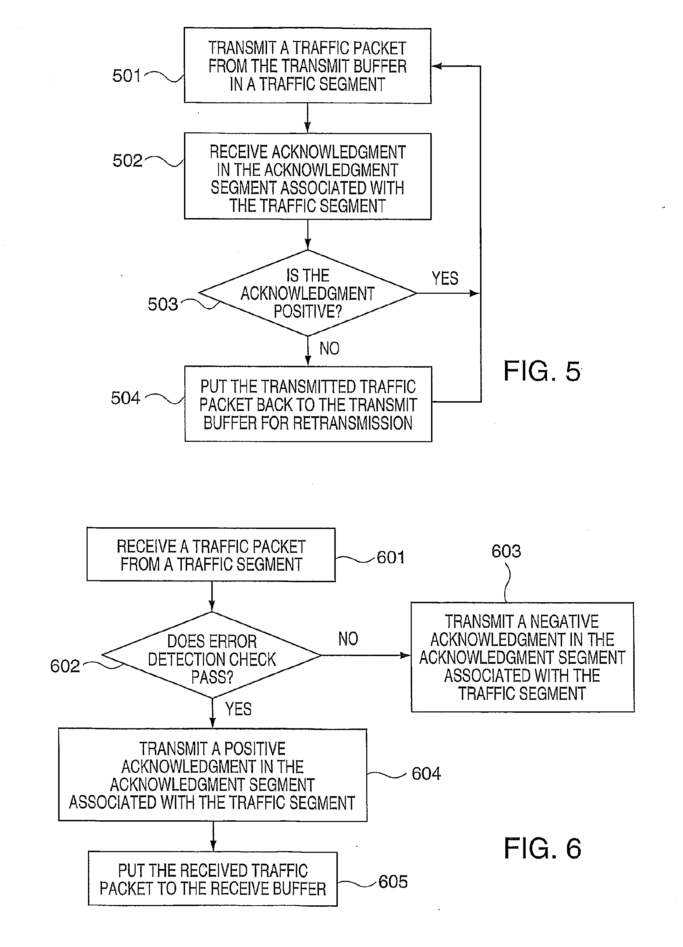

FIG. 5 is a flowchart illustrating steps in a transmitter process for determining whether to retransmit the traffic data in accordance with the invention. The transmitter process is started in step 501 which causes a traffic packet of data to be transmitted from a transmit buffer in a traffic segment. Therefore, for downlink traffic, the transmitter is the base station 105, and for uplink traffic, the transmitter is a wireless terminal 108. Then, in step 502 an acknowledgment is received in the acknowledgment segment associated with the transmitted traffic segment. Step 503 tests to determine if the received acknowledgment is a positive acknowledgment. Again, if the received acknowledgment is positive the traffic segment does not have to be retransmitted. Therefore, if the test result in step 503 is YES, a positive acknowledgment has been received and control is returned to step 501. Steps 501 through 503 are iterated until step 503 yields a NO result indicating that a negative acknowledgment has been received and retransmission of the associated traffic segment is required. Then, step 504 causes the transmitted traffic packet to be placed back into the transmit buffer for retransmission, and control is transferred to step 501. Thereafter, appropriate ones of steps 501 through 504 are iterated.

FIG. 6 is a flowchart illustrating steps in a receiver process for determining whether or not to transmit a retransmission request in accordance with the invention. The receive process is started in step 601, in which a traffic packet is received from a traffic segment. Therefore, for downlink traffic, the receiver is a wireless terminal 110, and for uplink traffic, the transmitter is the base station 107. Then, step 602 tests to determine if an error detection check of the data packet has been passed. If the test result in step 602 is NO, control is transferred to step 603. In turn, step 603 causes the transmission of a negative acknowledgment in the acknowledgment segment associated with the traffic segment that transported the traffic packet that failed the error detection check in step 602. If the test result in step 602 is YES, the error detection check of the traffic packet data has passed. Then, step 604 causes a positive acknowledgment to be transmitted in the acknowledgment segment associated with the traffic segment. Thereafter, step 605 causes the received traffic packet data to be placed in a receive buffer.

The above-described embodiments are, of course, merely illustrative of the principles of the invention. Indeed, numerous other methods or apparatus may be devised by those skilled in the art without departing from the spirit and scope of the invention. Moreover, the invention may be implemented as hardware, as an integrated circuit, via programming on a microprocessor, on a digital signal processor or the like.

### FURTHER SUMMARY OF THE INVENTION

1. A method for use in a wireless communications system comprising at least one base station and at least one wireless terminal and which communicate via a wireless channel resource comprising the steps of:
   transmitting traffic data in one of a plurality of traffic segments, said one traffic segment being used to transport traffic data;
   receiving an acknowledgment in a first acknowledgement segment corresponding directly to said one traffic segment;
   determining whether said received acknowledgment indicates that the traffic data is to be retransmitted; and
   retransmitting said traffic data when said determination so indicates.
2. The method as defined in 1, wherein said first acknowledgment segment is known prior to performing said receiving step to be dedicated to a first wireless terminal to which said one traffic segment is dedicated, and
   wherein retransmitting said traffic data includes transmitting said traffic data for a second time using a second one of said plurality of traffic segments which is also dedicated to said first wireless terminal.
3. The method of 2, wherein said acknowledgment includes at least one logical bit of information indicating whether or not said traffic data should be retransmitted.
4. The method as defined in 3, further comprising:
   receiving a second acknowledgment in a second acknowledgment segment corresponding directly to said second one of said plurality of traffic segments;
   transmitting traffic data in a third one of said plurality of traffic segments, said third traffic segment being dedicated to a second wireless terminal;
   receiving a third acknowledgment in a third acknowledgement segment corresponding directly to said third one of said plurality of traffic segments;
   determining whether said received third acknowledgment indicates that traffic data transmitted in said third one of said plurality of traffic segments is to be retransmitted; and
   retransmitting, to said second wireless terminal, the traffic data transmitted in said third one of said plurality of traffic segments in a fourth traffic segment when said determination so indicates.
5. A method for use in a wireless communications system comprising at least one base station and at least one wireless terminal and which communicate via a wireless channel resource comprising the steps of:
   partitioning said wireless channel resource into at least an acknowledgment channel including one or more acknowledgment segments and a traffic channel including one or more traffic segments, a one to one relationship existing between each acknowledgement segment in said acknowledgement channel and a corresponding traffic segment in said traffic channel;;
   transmitting traffic data in a traffic segment;
   receiving an acknowledgment in an acknowledgment segment corresponding to said traffic segment transporting said traffic data;
   determining whether said received acknowledgement indicates that the traffic data is to be retransmitted; and
   retransmitting said traffic data when said determination so indicates.
6. The method as defined in 5 wherein each acknowledgment segment has a prescribed transmission delay interval relative to a transmission interval of the corresponding traffic segment.
7. The method as defined in 5 wherein said acknowledgment includes at least one logical bit of information indicating whether or not said traffic data should be retransmitted.
8. The method as defined in 7 wherein each acknowledgement segment transports additional information relating to said corresponding traffic segment.
9. The method as defined in 7 wherein retransmission information in said acknowledgment consists of one logical bit.
10. The method as defined in 7 further comprising detecting a logical state of said at least one logical bit of information to determine whether said traffic data should be retransmitted.
11. The method as defined in 10 wherein said logical bit of information has a first logical state and a second logical state and one of said logical states indicates that said traffic data has to be retransmitted and the other of said logical states indicates that no retransmission of said traffic data is required.
12. The method as defined in 5 wherein said acknowledgment channel is common to all active wireless terminals, at least some segments of said acknowledgment channel being dedicated to different wireless devices.
13. The method as defined in 12 wherein said partitioning of said wireless channel resource into said acknowledgment channel and said traffic channel is in a fixed manner.
14. The method as defined in said 13 wherein each of said traffic segments has a fixed finite time interval and bandwidth.
15. The method as defined in 13 wherein each of said acknowledgment segments has a fixed finite time interval and bandwidth.
16. The method as defined in 5 further including the steps of receiving traffic data in a traffic segment, determining whether said received traffic data passes a prescribed error test, and in response to results of said error test, transmitting a first acknowledgment in the acknowledgment segment associated with the traffic segment that transported said traffic data when said error test has been passed and transmitting a second acknowledgement in the acknowledgment segment associated with the traffic segment that transported said traffic data when said error test has been failed.
17. The method as defined in 16 wherein in said base station said step of transmitting includes transmitting a traffic segment on a downlink and said step of receiving includes receiving an acknowledgment segment on an uplink.
18. The method as defined in 16 wherein in said base station said step of receiving includes receiving a traffic segment on an uplink and said step of transmitting includes transmitting an acknowledgment segment on a downlink.
19. The method as defined in 16 wherein in said at least one wireless terminal said step of receiving includes receiving a traffic segment on a downlink and said step of transmitting includes transmitting an acknowledgment segment on an uplink.
20. The method as defined in 16 wherein in said at least one wireless terminal said step of transmitting includes transmitting a traffic segment on an uplink and said step of receiving includes receiving an acknowledgment segment on a downlink.
21. A method for use in a wireless communications system comprising at least one base station and at least one wireless terminal which communicate via a wireless channel resource comprising the steps of:
   receiving traffic data in a traffic segment;
   determining whether said received traffic data passes a prescribed error test; and
   in response to results of said error test, transmitting a first prescribed acknowledgment in the acknowledgment segment associated with the traffic segment that transported said traffic data when said error test has been passed and transmitting a second prescribed acknowledgment in the acknowledgment segment associated with the traffic segment that transported said traffic data when said error test has been failed.
22. The method as defined in . 21 wherein said association of said acknowledgment segments and said traffic segments includes the acknowledgment segment having a prescribed delay interval relative to an associated traffic interval.
23. The method as defined in 21 wherein said acknowledgment includes at least one logical bit of information indicating whether or not said traffic data should be retransmitted.
24. The method as defined in 23 wherein said acknowledgment segments transport additional information relating to said associated traffic segments.
25. The method as defined in 23 wherein said step of determining includes a step of detecting a logical state of said at least one logical bit of information to determine whether said traffic data should be retransmitted.
26. The method as defined in 25 wherein said logical bit of information has a first logical state and a second logical state and one of said logical states indicates that said traffic data has to be retransmitted and the other of said logical states indicates that no retransmission of said traffic data is required.
27. The method as defined in 21 wherein said acknowledgment channel is common to all active wireless terminals.
28. Apparatus for use in a wireless communications system comprising at least one base station and at least one wireless terminal and which communicate via a wireless channel resource comprising:
   a transmitter for transmitting traffic data in a traffic segment;
   a receiver for receiving an acknowledgment in an acknowledgment segment associated in a prescribed fixed manner with said traffic segment transporting said traffic data;
   a detector for determining whether said received acknowledgment indicates that the traffic data is to be retransmitted; and
   said transmitter being controlled in response to the results of said determination to retransmit said traffic data in said traffic segment when said determination so indicates.
29. The apparatus as defined in 28 wherein said acknowledgment includes at least one logical bit of information indicating whether or not said traffic data should be retransmitted.
30. The apparatus as defined in 28 wherein said traffic data is transmitted in an uplink and said acknowledgment is received in a downlink.
31. The apparatus as defined in 28 wherein said traffic data is received in an uplink and said acknowledgment is transmitted in a downlink.
32. Apparatus for use in a wireless communications system comprising at least one base station and at least one wireless terminal and which communicate via a wireless channel resource comprising:
   a partitioner for partitioning said wireless channel resource into at least an acknowledgment channel including one or more acknowledgment segments and a traffic channel including one or more traffic segments, and for associating each of said acknowledgment segments with said traffic segments in a prescribed manner;
   a transmitter for transmitting traffic data in a traffic segment;
   a receiver for receiving an acknowledgment in an acknowledgment segment associated with said traffic segment transporting said traffic data;
   a detector for determining whether said received acknowledgment indicates that the traffic data is to be retransmitted; and
   said transmitter being controlled in response to the results of said determination to retransmit said traffic data in said traffic segment when said determination so indicates.
33. The apparatus as defined in 32 wherein said association of said acknowledgment segments and said traffic segments includes the acknowledgment segment having a prescribed delay interval relative to an associated traffic interval.
34. The apparatus as defined in 32 wherein said acknowledgment includes at least one logical bit of information indicating whether or not said traffic data should be retransmitted.
35. The apparatus as defined in 34 wherein said acknowledgment segments transport additional information relating to said associated traffic segments.
36. The apparatus as defined in 34 wherein said detector detects a logical state of said at least one logical bit of information to determine whether said traffic data should be retransmitted.
37. The apparatus as defined in 36 wherein said logical bit of information has a first logical state and a second logical state and one of said logical states indicates that said traffic data has to be retransmitted and the other of said logical states indicates that no retransmission of said traffic data is required.
38. The apparatus as defined in 37 wherein said acknowledgement channel is common to all active wireless terminals.
39. The apparatus as defined in 38 wherein said partitioning of said wireless channel resource into said acknowledgment channel and said traffic channel is in a fixed manner.
40. The apparatus as defined in 39 wherein each of said traffic segments has a prescribed finite time interval and bandwidth.
41. The apparatus as defined in 40 wherein each of said acknowledgment segments has a prescribed finite time interval and bandwidth.
42. The apparatus as defined in 32 further including a second receiver for receiving traffic data in a traffic segment, a second detector for determining whether said received traffic data passes a prescribed error test, and a second transmitter responsive to results of said error test for transmitting a first prescribed acknowledgment in the acknowledgment segment associated with the traffic segment that transported said traffic data when said error test has been passed and for transmitting a second prescribed acknowledgment in the acknowledgment segment associated with the traffic segment that transported said traffic data when said error test has been failed.
43. The apparatus as defined in 42 wherein in said base station said transmitter transmits a traffic segment on a downlink and said receiver receives an acknowledgment segment on an uplink.
44. The apparatus as defined in 43 wherein in said base station said receiver receives a traffic segment on an uplink and said transmitter transmits an acknowledgment segment on a downlink.
45. The apparatus as defined in 42 wherein in said at least one wireless terminal said second receiver receives a traffic segment on a downlink and said second transmitter transmits an acknowledgment segment on an uplink.
46. The apparatus as defined in 42 wherein in said at least one wireless terminal said second transmitter transmits a traffic segment on an uplink and said second receiver receives an acknowledgment segment on a downlink.
47. Apparatus for use in a wireless communications system comprising at least one base station and at least one wireless terminal and which communicate via a wireless channel resource comprising:
   a receiver for receiving traffic data in a traffic segment;
   a detector for determining whether said received traffic data passes a prescribed error test; and
   a transmitter responsive to results of said error test for transmitting a first prescribed acknowledgment in the acknowledgement segment associated with the traffic segment that transported said traffic data when said error test has been passed and for transmitting a second prescribed acknowledgment in the acknowledgment segment associated with the traffic segment that transported said traffic data when said error test has been failed.
48. The apparatus as defined in 47 wherein said acknowledgment includes at least one logical bit of information indicating whether or not said traffic data should be retransmitted.
49. The apparatus as defined in 48 wherein said acknowledgment segments transport additional information relating to said associated traffic segments.
50. The apparatus as defined in 48 wherein said detector detects a logical state of said at least one logical bit of information to determine whether said traffic data should be retransmitted.
51. The apparatus as defined in 50 wherein said logical bit of information has a first logical state and a second logical state and one of said logical states indicates that said traffic data has to be retransmitted and the other of said logical states indicates that no retransmission of said traffic data is required.
52. The apparatus as defined in 47 wherein said acknowledgment channel is common to all active wireless terminals.
53. Apparatus for use in a wireless communications system comprising at least one base station and at least one wireless terminal which communicate via a wireless channel resource comprising the steps:
   means for transmitting traffic data in a traffic segment;
   means for receiving an acknowledgment in an acknowledgment segment associated in a prescribed fixed manner with said traffic segment transporting said traffic data;
   means for determining whether said received acknowledgment indicates that the traffic data is to be retransmitted; and
   means for retransmitting said traffic data in said traffic segment when said determination so indicates.
54. The apparatus as defined in 53 wherein said acknowledgment includes at least one logical bit of information indicating whether or not said traffic data should be retransmitted.
55. The apparatus as defined in 53 wherein said traffic data is transmitted in an uplink and said acknowledgment is received in a downlink.
56. The apparatus as defined in . 53 wherein said traffic data is received in an uplink and said acknowledgment is transmitted in a downlink.
57. Apparatus for use in a wireless communications system comprising at least one base station and at least one wireless terminal which communicate via a wireless channel resource comprising:
   means for receiving traffic data in a traffic segment;
   mans for determining whether said received traffic data passes a prescribed error test; and
   means responsive to results of said error test for transmitting a first prescribed acknowledgement in the acknowledgment segment associated with the traffic segment that transported said traffic data when said error test has been passed and transmitting a second prescribed acknowledgment in the acknowledgment segment associated with the traffic segment that transported said traffic data when said error test has been failed.
58. The apparatus as defined in 57 wherein said association of said acknowledgment segments and said traffic segments includes the acknowledgment segment having a prescribed delay interval relative to an associated traffic interval.
59. The apparatus as defined in 57 wherein said acknowledgment includes at least one logical bit of information indicating whether or not said traffic data should be retransmitted.

## Claims

1. A method for use in a wireless communications system (100) comprising at least one base station (101) and at least one wireless terminal (103) which communicate via a wireless channel resource, the method comprising:
receiving (601) traffic data in one of a plurality of traffic segments (202, 203, 301, 302, 401, 403) of said wireless channel resource, wherein said wireless channel resource is partitioned into at least an acknowledgment channel including a plurality of acknowledgment segments (201, 304, 305, 402, 404) and a traffic channel including said plurality of traffic segments, said plurality of acknowledgement segments having a first bandwidth and said plurality of traffic segments having a second bandwidth different from the first bandwidth;
determining (602) whether said received traffic data passes a prescribed error test; and
in response to results of said error test, transmitting (604) a first prescribed acknowledgment in one of said plurality of acknowledgment segments that is associated with the traffic segment that transported said traffic data when said error test has been passed and transmitting (603) a second prescribed acknowledgment in the acknowledgment segment associated with the traffic segment that transported said traffic data when said error test has failed.

2. The method as defined in claim 1 wherein said association of said acknowledgment segments and said traffic segments includes the acknowledgment segment having a prescribed delay interval relative to an associated traffic interval.

3. The method as defined in claim 1 wherein said acknowledgment includes at least one logical bit of information indicating whether or not said traffic data should be retransmitted.

4. The method as defined in claim 3 wherein said acknowledgment segments transport additional information relating to said associated traffic segments.

5. The method as defined in claim 3 wherein said step of determining includes a step of detecting a logical state of said at least one logical bit of information to determine whether said traffic data should be retransmitted.

6. The method as defined in claim 5 wherein said logical bit of information has a first logical state and a second logical state and one of said logical states indicates that said traffic data has to be retransmitted and the other of said logical states indicates that no retransmission of said traffic data is required.

7. The method as defined in claim 1 wherein said acknowledgment channel is common to all active wireless terminals.

8. An apparatus for use in a wireless communications system (100) comprising at least one base station (101) and at least one wireless terminal (103) which communicate via a wireless channel resource comprising:
means for receiving traffic data in one of a plurality of traffic segments (202, 203, 301, 302, 401, 403) of said wireless channel resource, wherein said wireless channel resource is partitioned into at least an acknowledgment channel including a plurality of acknowledgment segments (201, 304, 305, 402, 404) and a traffic channel including said plurality of traffic segments, said plurality of acknowledgement segments having a first bandwidth and said plurality of traffic segments having a second bandwidth different from the first bandwidth;
means for determining whether said received traffic data passes a prescribed error test; and
means responsive to results of said error test for transmitting a first prescribed acknowledgment in one of said plurality of acknowledgment segments that is associated with the traffic segment that transported said traffic data when said error test has been passed, and means for transmitting a second prescribed acknowledgment in the acknowledgment segment associated with the traffic segment that transported said traffic data when said error test has failed.

9. The apparatus as defined in claim 8 wherein said association of said acknowledgment segments and said traffic segments includes the acknowledgment segment having a prescribed delay interval relative to an associated traffic interval.

10. The apparatus as defined in claim 8 wherein said acknowledgment includes at least one logical bit of information indicating whether or not said traffic data should be retransmitted.

11. The apparatus as defined in claim 10 wherein said acknowledgment segments transport additional information relating to said associated traffic segments.

12. The apparatus as defined in claim 10 wherein said means for determining includes means for detecting a logical state of said at least one logical bit of information to determine whether said traffic data should be retransmitted.

13. The apparatus as defined in claim 12 wherein said logical bit of information has a first logical state and a second logical state and one of said logical states indicates that said traffic data has to be retransmitted and the other of said logical states indicates that no retransmission of said traffic data is required.

14. The apparatus as defined in claim 8 wherein said acknowledgment channel is common to all active wireless terminals.

15. An apparatus for use in a wireless communications system (100) comprising at least one base station (101) and at least one wireless terminal (103) and which communicate via a wireless channel resource comprising:
a receiver (107, 110) for receiving traffic data in one of a plurality of traffic segments (202, 203, 301, 302, 401, 403) of said wireless channel resource, wherein said wireless channel resource is partitioned into at least an acknowledgment channel including a plurality of acknowledgment segments (201, 304, 305, 402, 404) and a traffic channel including said plurality of traffic segments, said plurality of acknowledgement segments having a first bandwidth and said plurality of traffic segments having a second bandwidth different from the first bandwidth;
a detector (106, 109) for determining whether said received traffic data passes a prescribed error test; and
a transmitter (105, 108) responsive to results of said error test for transmitting a first prescribed acknowledgment in one of said plurality of acknowledgment segments that is associated with the traffic segment that transported said traffic data when said error test has been passed and for transmitting a second prescribed acknowledgment in the acknowledgment segment associated with the traffic segment that transported said traffic data when said error test has failed.
